# EUROPEAN PATENT APPLICATION

(11) **EP 2 289 689 A2**
(43) Date of publication of application: **02.03.2011**
(21) Application number: 10251510.3
(22) Date of filing: 27.08.2010
(51) Int. Cl.: B29C 70/30, B29C 70/54

(54) **Composite laminate construction method**

(30) Priority: 31.08.2009 US 550847
(71) Applicant: United Technologies Corporation, Hartford, CT 06101 (US)
(72) Inventor: Roach, James T., Vernon Connecticut 06066 (US)
(74) Representative: Leckey, David Herbert

(57) **Abstract**

A method for constructing an airfoil made of a plurality of plies (15) has several steps including inputting a spatial definition of an exterior of the airfoil, inputting a parameter of a ply to be used in the design, using a protocol for the data describing each of the plurality of plies such that the data conforms automatically to steps used to create the design, and designing a plurality of plies according to the parameter, the protocol and the spatial definition to fill the exterior of the airfoil.

## Description

### BACKGROUND

Typically, when designing an airfoil, a user utilizes a multi-step process. The user starts with an aerodynamic text file that includes boundary points for the airfoil. Then, a user must determine the dimension of mid-surfaces of plies to be used in creating the airfoil by using a Computer-Aided Design system. The mid-surfaces are used to determine the number and thickness of plies necessary to build the airfoil. After this step, a user determines the offsets of each ply that are necessary to form the airfoil by using programs written in known programming languages. Offsets usually determine the external topography of the foil. Offsetting is usually done from the outside of the airfoil towards the middle, but offsetting may include building around an airfoil core, wrapping around a hypothetical shape, or alternating plies on the pressure side and the suction side of the airfoil.

The user then determines boundaries for each ply depending on a desired finished shape, creates the parameters for that defined shape and decides the orientation for each ply when laid up onto the airfoil.

After this process, software is used to determine the drape of the fabric (fiber orientations) on the airfoil and then the part is analyzed for suitability. A user then determines whether the design is acceptable either starting over, changing parameters, or moving forward.

### SUMMARY OF THE INVENTION

A method for creating a design of an airfoil made of a plurality of plies has several steps including inputting a spatial definition of an exterior of the airfoil, inputting a parameter of a ply to be used in the design, inputting a protocol for the data describing each of the plurality of plies such that the data conforms automatically to steps used to create the design, and designing a plurality of plies according to the parameter, the protocol and the spatial definition to fill the exterior of the airfoil.

According to another aspect, a method for creating a design of an airfoil made of a plurality of plies has several steps including inputting a spatial definition of an exterior of the airfoil, inputting a parameter of a ply to be used in the design, recognizing abnormal data in a step taken to create the design, and creating a plurality of plies according to the parameter, and the spatial definition to fill the exterior of the airfoil.

According to a still further aspect, a method for creating a design of an airfoil made of a plurality of plies has several steps including inputting a spatial definition of an exterior of the airfoil, inputting a parameter of a ply to be used in the design, inputting a protocol for the data describing each of the plurality of plies such that the data conforms automatically to steps used to create the design, creating a plurality of plies according to the parameter, the protocol and the spatial definition to fill the exterior of the airfoil and recognizing abnormal data in a step taken to create the design.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 shows an exploded view of an airfoil and the plies used to create that airfoil.
Figure 2 shows a cross-sectional view of a plurality of plies laid up upon each other to create a leading edge of an airfoil.
Figure 3 shows a process used to create an airfoil.

### DETAILED DESCRIPTION

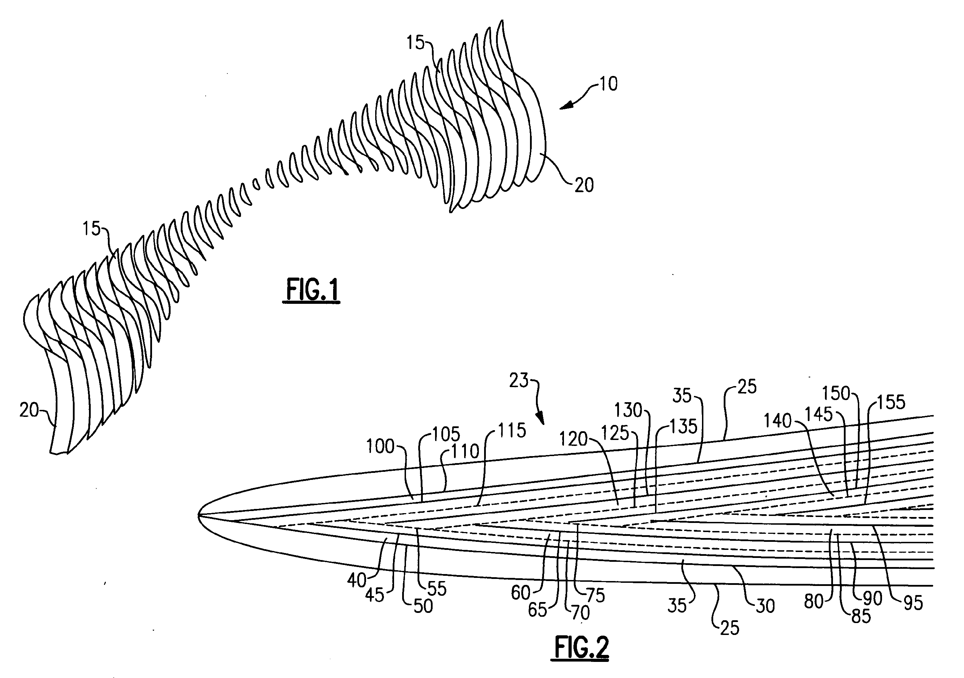

Referring to Figure 1, an exploded airfoil 10 having a plurality of plies 15 is shown. Each ply 15 is shown, some having different three-dimensional shapes and twists, that allow the plies if laid up together to form the airfoil 10. The outer plies 20 have a side exposed to the outside of the airfoil. The other plies are disposed on the interior of the blade and may have a portion of their sides exposed as each ply having a different shape is offset upon another ply or have an edge exposed if that ply is mated to an identical surface of another ply.

Referring now to Figure 2, a cross-section of an airfoil is shown inserted in a mold 23 having surfaces 25. The airfoil 10 has a suction side 30 and a pressure side 35. Suction side ply 40 is represented by three lines; mid-surface line 45, exterior boundary line 50 and interior boundary line 55. Similarly, suction side ply 60 is represented by three lines; mid-surface line 65, exterior boundary line 70 and interior boundary line 75. And, suction side ply 80 is represented by three lines; mid-surface line 85, exterior boundary line 90 and interior boundary line 95. Pressure side ply 100 is represented by three lines; mid-surface line 105, exterior boundary line 110 and interior boundary line 115. Similarly, pressure side ply 120 is represented by three lines; mid-surface line 125, exterior boundary line 130 and interior boundary line 135. And, pressure side ply 140 is represented by three lines; mid-surface line 145, exterior boundary line 150 and interior boundary line 155.

In the non-limiting embodiment shown, suction side ply 40 is designed to be placed in the mold 23 first. Pressure side ply 100 is designed to be placed in the mold 23 next. The edge of the pressure side ply 100 defined by lines 105, 110 and 115 is designed to be trimmed at the interior boundary line 55 of the suction side ply 40.

Suction side ply 60 is designed to be placed upon ply 40 in the mold 23 next. The edge of the suction side ply defined by lines 65, 70, and 75 is designed to be trimmed at the interior boundary line 115 of the pressure side ply 100. Pressure side ply 120 is designed to be placed upon ply 100 in the mold 23 next. The edge of the pressure side ply 120 defined by lines 125, 130 and 135 is designed to be trimmed at the interior boundary line 75 of the suction side ply 60. Suction side ply 80 is designed to be placed upon ply 60 in the mold 23 next. The edge of the suction side ply defined by lines 85, 90, and 95 is designed to be trimmed at the interior boundary line 135 of the pressure side ply 120. Pressure side ply 140 is designed to be placed upon ply 120 in the mold 23 next. The edge of the pressure side ply 140 defined by lines 145, 150 and 155 is designed to be trimmed at the interior boundary line 95 of the suction side ply 80. To finish the airfoil, design construction continues in a similar manner for subsequent plies (not shown). Trimming may also include mid-point to mid-point trimming or full-surface to full-surface trimming.

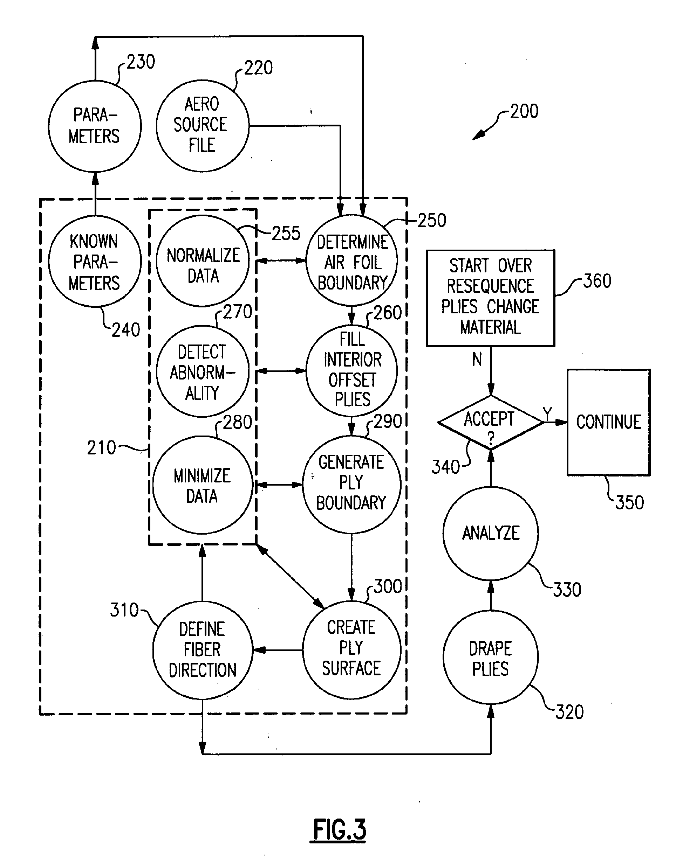

Referring now to Figure 3, a non-limiting method 200 of designing an airfoil is shown. The method may have what could be termed as a command structure 210 as will be discussed hereinbelow.

The user inputs to a computer (not shown) an aero-source text file 220 uses either aerodynamic data or user input data that includes boundary points for the airfoil. For aerodynamic data, external surfaces are generated from the result of aerodynamic analysis, such as computational fluid dynamics and for user-defined surfaces, the information is conformed to the parameters. The aerodynamic file defines fields for the pressure and suction sides according to X, Y, Z point protocols. Such fields are shown in cross-section in Figure 2 as lines 50 and 110.

The user may also input to a computer (not shown) a myriad of parameters 230 that must be followed as rules. For instance, a non-limiting sample of parameters 230 required for each ply 15 a user may input includes a type of ply material (e.g., para-aramid synthetic fiber, graphite, fiberglass, etc) and its characteristics, whether the ply is a perform, ply thickness, ply mid-point thickness, ply orientation relative to other plies or a midline (not shown), the ply density, the ply material cost, the type of weave of the ply, stacking thickness, ply sequencing, etc. Similarly, because there are a number of ways to stack the plies; e.g., from the outside of the airfoil towards the middle, building around an airfoil core, wrapping around a hypothetical shape, or alternating plies on the pressure side and the suction side of the airfoil, a user may choose to have the computer choose any one or any combination of the ways to stack plies in designing the airfoil.

By loading parameters, a data base 240 of known parameters is created for readily and consistently pulling these parameters into future analysis with clear traceability. Material characteristics and reactions in given designs can be used to predict future applicability of those materials in other designs. Also, by including this information into the protocols, a designer has ready access to information about the material in order to make rapid design decisions and can load parameters from the data base 240.

A designer may also, for instance specify a constant ply thickness or vary ply thickness in accordance with perceived needs of the airfoil such as strength, weight, longevity and vibration resistance etc. The user may also choose or experiment with any function of thickness to test results. For instance, the thicknesses can be sinusoidal through the thickness of the airfoil with plies assuming variable widths given their sequence in a ply stack that makes up the airfoil (see Figure 1). Other trigonometric or logarithmic or algebraic functions etc. may also be applied herein.

As will be seen herein, airfoils are designed in an automated, consistent way that minimizes computer crashes, normalizes computer system units, minimizes design abnormalities, promotes conformity with downstream analysis, minimizes non-parametric results and minimizes large files.

Once an aerodynamic text file 220 and parameters 230 are input, the computer interrogates the aerodynamic data to determine the exterior points of the airfoil 10 (step 250) that define the airfoil typography (see Figure 1). The computer uses the external topography to design the airfoil from the outside of the airfoil in. The computations used to fill the volume of the airfoil with plies are performed using a CAD-independent geometric kernel such as Nlib™. Once the surfaces have been calculated in the kernel, the data is then transformed into CAD geometry.

Referring now to step 260, the computer then interrogates the surfaces to create the offsets and the plies related to them also using X, Y, Z point protocols. Offsets usually determine the external topography of the airfoil. Offsetting is usually done from the outside of the airfoil towards the middle, but offsetting may include building around an airfoil core, wrapping around a hypothetical shape, or alternating plies on the pressure side and the suction side of the airfoil.

As the computer works through this step and other steps herein (e.g., 250, 260, 290, 300 and 310), the command structure 210 acts via step 255 to maintain data passing through the non-limiting process herein in a format that is proper for the steps required downstream thereby minimizing format problems that could cause a computer to crash and force a user to start over.

Further referring to step 260, the computer uses a three dimensional CAD program (not shown) that fills the volume of the airfoil within the pressure and suction side fields 35 and 30 and subsequent inward plies.

As the program works through this step 260 and the other steps shown herein (e.g., 250, 260, 290, 300 and 310), the command structure 210 actively looks for problems that might cause the computer to falter by comparing surface point definitions that are not normal (step 270). For instance, if a numerical surface of a ply has characteristics that would cause the surface to "bowtie", where the surface tends to dip in the middle and scrunch together, or "fold" upon itself, that design is rejected and the computer keeps trying to create a proper offset without the tendency to "bowtie" or "fold". The computer also compares ply shapes to known shapes so that the ply has a right feel, e.g., it looks right. And, the computer runs 1 st and 2nd surface derivatives to minimize and smooth jags, shear, wash-boarding and ripples. Any points that are designed to be perpendicular to a surface of a ply are eliminated or smoothed. Intersecting points are similarly eliminated.

Further, in Step 260 and the other steps shown herein (e.g., 250, 260, 290, 300 and 310), the command structure via step 280 minimizes the number of points necessary to describe the surfaces and plies to be designed. This step allows the computer to minimize the size of files thereby minimizing a probability that the computer would crash and force a user to start over.

Referring now to Step 290, ply boundaries are determined by comparing them in a CAD program with the design exterior surface (see lines 21 and 22 of Figure 2). The boundaries are obtained via the intersection of the boundary with trimming geometry (e.g., opposing surfaces for an alternating sequence, outer and inner limits on the part or core surface definition.

Referring now to Step 300, the ply surfaces are generated directly by point field, or by using the previously obtained ply boundaries as trimming entities, e.g., the geometry used to define a cut in the ply. In making the determination of trimming entities, the mid-surface of each ply (e.g., lines 45, 65, 8.5, 105, 125, and 145 of plies 40, 60, 80, 100, 120 and 140, respectively - see Figure 2) may be used to determine what to trim against.

In defining the fiber direction as shown in Step 310, fibers of different materials usually have some bias and are typically stiffer in one direction than another. By choosing the orientation of the plies as a parameter as stated hereinabove or allowing the computer to test different orientations, different airfoil characteristics may be designed into the airfoil.

After fiber direction is established, the designed plies definitions are sent to Step 320 where draping occurs as is known in the art. The design is then analyzed in Step 330 and a decision is made to accept the design (see step 340) and move forward (see step 350) or to reject the design (see step 360) and change the parameters of the design, e.g., re-sequence the plies, change material, etc.

By normalizing the data protocols for each function in step 255, the non-limiting embodiment shown herein allows the present system to integrate several functions into one computer because the data does not have to be massaged as it is sneaker-netted from one application to another. Moreover, because any surfaces created are being tested to determine whether they are abnormal (e.g., tending to "fold" or "bowtie", appears non-functional, perpendicular points, jags, intersections, shear, wash-boarding and ripples etc.), compared to a functioning airfoil or ply used therein as shown in step 270 saves time because an abnormal surface is rejected or fixed. The minimization of points as shown in step 280 necessary to describe a ply or surface further enhances the speed and reliability of the process by minimizing file sizes that could slow or crash a computer. Normalized data protocols are critical in order to capture design intent, but such protocols are over-ridden by abnormality detection.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. Method for constructing an airfoil, the airfoil to be made of a plurality of plies, said method comprising the steps of:
inputting a spatial definition of an exterior of the airfoil;
inputting a parameter of a ply of said plurality of plies to be used in said design;
using a protocol for data describing each of said plurality of plies such that said data conforms automatically to steps used to create said design; and
creating said plurality of plies according to said parameter, said protocol and said spatial definition to fill said exterior of the airfoil.

2. The method of claim 1 further comprising the step of:
creating a ply of said plurality of plies offset according to said parameter, said protocol and said spatial definition.

3. The method of claim 2 further comprising the step of:
obtaining a boundary of a ply of said plurality of plies according to said parameter, said protocol and said spatial definition.

4. The method of any preceding claim wherein the step of inputting a parameter includes inputting a desired physical attribute of said ply of said plurality of plies, said parameter optionally being input from a data base of known parameters.

5. The method of any preceding claim further comprising the steps of:
recognizing abnormal data in a step taken to create said design.

6. The method of claim 5 further comprising the step of:
rejecting said abnormal data; or
fixing said abnormal data such that said data conforms with said parameter, said protocol and said spatial definition.

7. The method of claim 5 or 6 wherein said abnormal data includes any of a bowtie, fold or an intersection, or any integral of a surface of a ply.

8. The method of any preceding claim further comprising:
minimizing a number of points defining a surface of said ply.

9. Method for constructing an airfoil, the airfoil to be made of a plurality of plies, said method comprising the steps of:
inputting a spatial definition of an exterior of the airfoil;
creating said plurality of plies according to said spatial definition to fill said exterior of the airfoil; and
recognizing abnormal data in a step taken to create said design.

10. The method of claim 9 further comprising the step of:
creating a ply of said plurality of plies offset according to said spatial definition, and, optionally, further comprising the step of:
obtaining a boundary of said ply of said plurality of plies according to said spatial definition.

11. The method of claim 9 or 10 further comprising the steps of:
using a protocol for data describing each of said plurality of plies such that said data conforms automatically to steps used to create said design.

12. The method of claim 9, 10 or 11 further comprising the steps of:
fixing said abnormal data such that said data conforms with said protocol and said spatial definition.

13. The method of any of claims 9 to 12 wherein said abnormal data includes any of a bowtie, fold or an intersection, or any integral of a surface of a ply of said plurality of plies.

14. The method of any of claims 9 to 13 further including:
inputting a parameter of a ply to be used in said design.

15. The method of any of claims 9 to 14 further comprising:
minimizing a number of points defining a surface of a ply.
